Europäisches Patentamt

European Patent Office

Office européen des brevets

(11) Publication number: **0 306 593**
A1

(12) **EUROPEAN PATENT APPLICATION**

(21) Application number: **87850242.6**

(22) Date of filing: **11.08.87**

(51) Int. Cl.⁴: **B25B 1/22 , B23Q 3/00**

(43) Date of publication of application:
**15.03.89 Bulletin 89/11**

(84) Designated Contracting States:
**CH DE FR GB IT LI**

(71) Applicant: **SPIREX TOOLS AB**
**Romellsvägen 5**
**S-703 56 Örebro(SE)**

(72) Inventor: **Danielsen, Jan**
**Romellsvägen 5**
**S-703 56 Örebro(SE)**

(74) Representative: **Lautmann, Kurt O.**
**KURT LAUTMANNS PATENTBYRA AB Box 245**
**S-691 25 Karlskoga(SE)**

(54) **Retaining device.**

㊗ In order to secure a body (16) in a predetermined position a multi-jointed arm is required, the body (16) being applied in the free end (3) of the arm, the other end (1) of the arm being firmly secured and the joints being locked with the aid of screw joints when said body (16) has been positioned as desired. This is difficult to achieve since it is difficult to adjust the screw joint accurately. Furthermore, it is difficult to make screw joints sufficiently resistant to torsional forces. These drawbacks are eliminated according to the invention by applying hydraulic pressure on at least one (35) of two cooperating surfaces (34 and 35) by means of a pressure medium.

FIG. 3

EP 0 306 593 A1

# A retaining device

The present invention relates to a retaining device. Conventional devices of this type comprise a multi-jointed arm in which one end is secured in a stand or the like and the other end retains a unit which may comprise a tool, a vice or the like. Each joint consists of two cylindrical or conical surfaces. One is an external cylindrical or conical surface and the other an internal cylindrical or conical surface. The two surfaces are slidable towards each other and can be set in any desired position. When the desired position has been reached, the surfaces are locked by some suitable mechanical aid. The number of joints should be at least three. Known locking means for the joints in such retaining devices have the drawback that they tend to move during adjustment and do not always remain in position, as well as the joint having difficulty in withstanding torsional forces which may disturb the adjustment.

The object of the present invention is to eliminate the drawbacks mentioned above and this is achieved by arranging a cavity behind one or two of the cooperating surfaces and supplying said cavity with a pressure medium such as oil. The enclosed pressure medium is limited by a plunger which, when moved, increases or decreases the pressure in said cavity. When the pressure increases, the surface in front is altered so that the two surfaces in a joint are clamped firmly together. Thanks to the lack of mechanical parts in the locking device, an exact adjustment is achieved since the surfaces are not subjected to torsional movement. Furthermore the surfaces are clamped so tightly together that an extremely considerable force is required to disturb their relative position.

According to the present invention it is advisable for one joint to comprise a bushing in the form of a pipe with a flange at one end. A tubular cavity is formed between the two surfaces of the pipe, which communicates with a pressure medium source, the output of which is limited by one or more plungers. The cavity in the tubular part of the bushing is arranged so that at least the inner cylindrical surface is altered upon an increase in pressure, causing a decrease in the diameter of the tube. If the cavity is located so that the outer cylindrical surface is also effected by an increase in pressure, the pipe as such will acquire increased diameter.

It is advisable for the cavity to be in the form of a tube in communication with a pressure medium source arranged in the flange. The pressure medium source and cavity are limited by a plunger, movement of which will either increase or decrease the pressure of the medium in the tubular cavity.

A bushing of the type described can be used as standard element and utilized in the manufacture of a retaining device comprising an arm with a number of joints. The use of a standard element reduces production costs for the retaining device.

Additional features of the present invention are revealed in the following claims.

One embodiment of the present invention will be described by way of example, with reference to the accompanying three sheets of drawings, in which

Figure 1 shows a retaining device constructed in conventional manner, in which

Figure 2 shows a part of a standard joint and

Figure 3 shows a complete retaining device according to the present invention, including the standard part according to Figure 2.

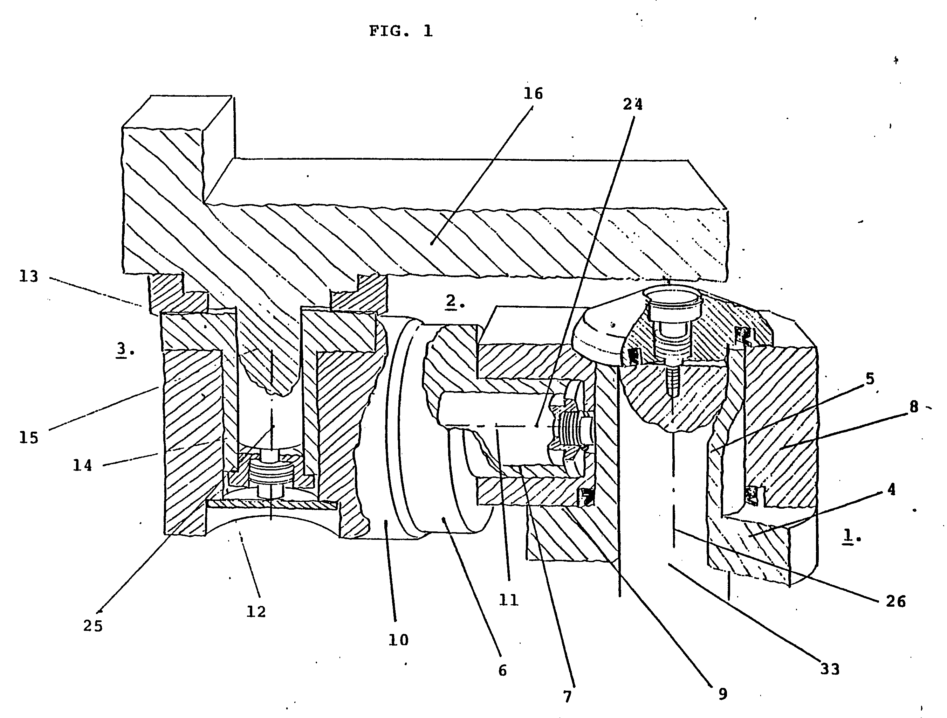

Figure 1 shows a known retaining device with cylindrical surfaces, consisting of three bushings 1, 2 and 3. The bushing 1 is provided with a flange 4 and a pipe 5. A body 8 is arranged to pivot about the pipe 5. The bushing 1 contains a cylinder 33 to fill its cavity. The body 8 has a horizontally cylindrical hole 9 for the bushing 2, which is provided with a flange 6 and tubular section 7. The tubular section 7 is inserted in the hole 9 of the body 8. A second body 10 is provided with a cylindrical part 11 which is inserted in the hollow part of the bushing. The body 10 is also provided with a vertical hole 13 into which the bushing 3 is inserted. A unit 16 is provided with a cylindrical portion 15 which is inserted into the bushing 3, which has a flange 13 and pipe 14. Mechanical locking means, not shown, are provided for the three bushings. The unit 16 can be adjusted to a first position by turning the body 8 about the shaft 26, to a second position about the shaft 24 with the aid of the body 10, and to a final position by turning about the shaft 25.

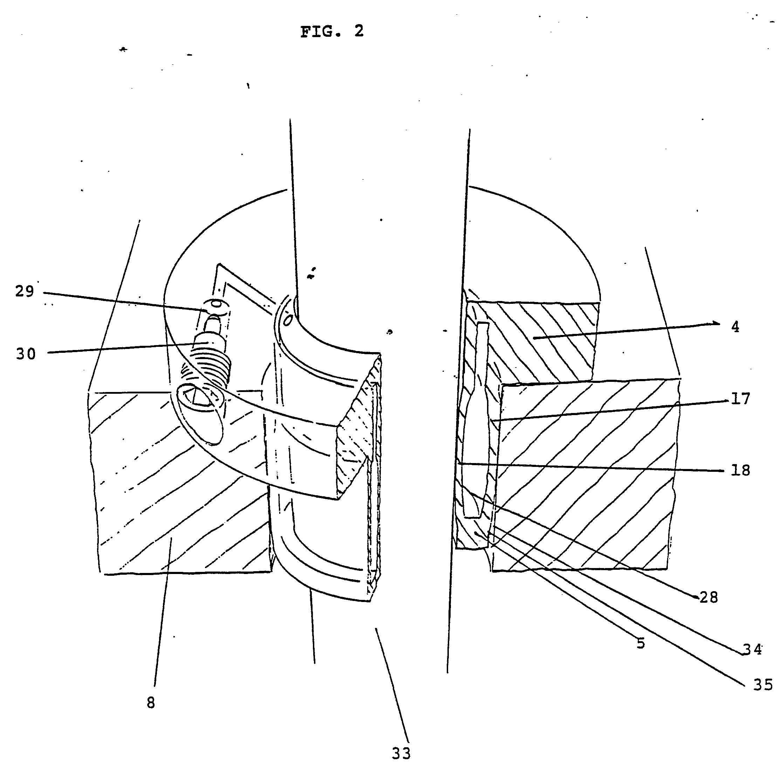

Figure 2 shows the bushing 1 with flange 4 and tubular portion 5 with tubular cavity 28. This tubular cavity is in communication with a pressure source 29 provided with plunger mechanism 30 which can be moved so that the pressure in the cavity 28 is caused to increase or decrease. At a certain pressure increase in the cavity 28 the inner and outer cylindrical walls of the cavity will be displaced outwards and inwards, causing the inner diameter of the pipe 5 to decrease while its outer diameter increases. This causes the inner surface of the body 8 to be clamped extremely tightly to the outer surfaces of the body 33. Locking is thus achieved without the use of movable parts which might endanger the accuracy of the adjustment or even reduce the strength of the locking mechanism since parts secured by mechanical locking cannot withstand torsional forces above a certain value.

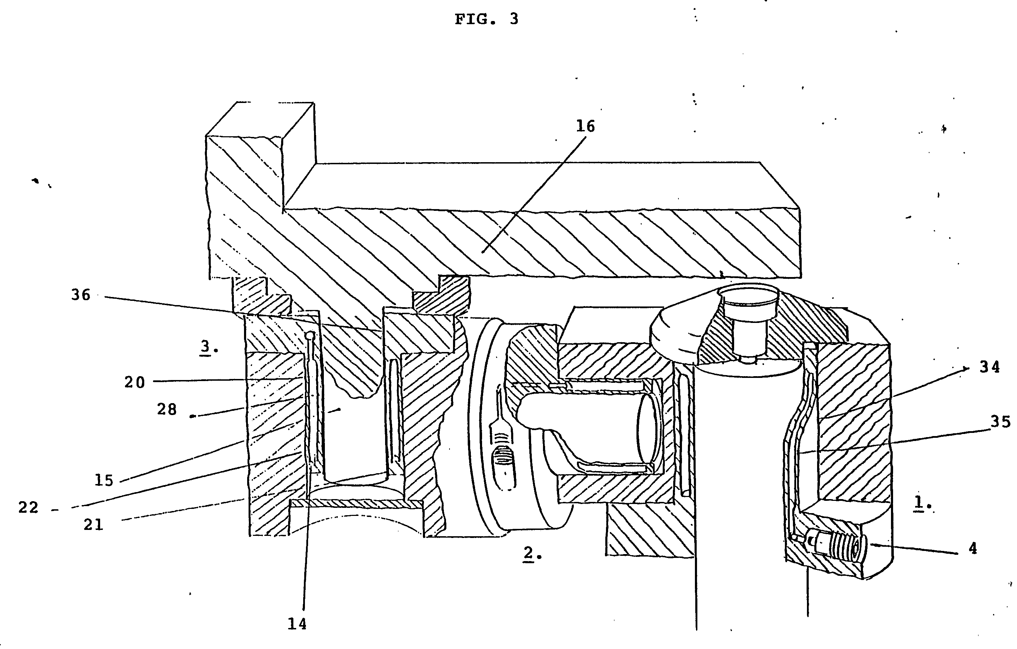

Figure 3 shows a means according to Figure 1 in which the bushings have been replaced by bushings according to Figure 2, thus offering improved accuracy of adjustment and better resistance to large torsional forces. The unit 16 suitable consists of a vice and oil is suitably used as pressure medium.

It should be evident that a retaining device is constructed much more quickly and at less expense if bushings according to the invention are utilized.

The material used may be of the same or different types. Metals or metal, plastics, carbon fibre materials are feasible.

## Claims

1. A retaining device for a unit (16) such as a vice, a tool such as a vice, magnetic chuck or the like, having three joints (1,2,3) arranged one after the other, each consisting of an external cylindrical surface (35) and an internal cylindrical surface (34), slidable towards each other and lockable in any desired position, one (21) of the cylindrical surfaces (20,21) of one (3) of the end joints forming a part of said unit (16) and one (35) of the cylindrical surfaces (34,35) of the other end joint (1) being included in a part (4) in order to secure the retaining device, **characterised** in that a cavity (28) exists at least behind one of the cylindrical surfaces (35) of a pair (34,35), said cavity (28) being connected to a pressure-medium source (29) with variable pressure, the position of said surface (35) altering in dependence on said pressure.

2. A retaining device according to claim 1, in which the external cylindrical surface (36) belongs to a cylindrical body (15), the internal cylindrical surface (20) belongs to a tubular body (14) and the cavity (28) is arranged in the tubular body (14), **characterised** in that the positions of both cylindrical surfaces (20,22) of the tubular body are altered as the pressure of the pressure medium alters.

3. A retaining device according to claim 1, **characterised** in that the cavity (28) is in the form of a tube.

4. A modification according to one or more of the preceding claims, **characterised** in that the cooperating surfaces are conical.

FIG. 1

EP 0 306 593 A1

FIG. 2

FIG. 3

EP 0 306 593 A1

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| Y | FR-A- 914 937 (ATELIERS MECANIQUES DE VAUCOULEURS) <br> * Figures; page 2, lines 27-52 * | 1-4 | B 25 B 1/22 <br> B 23 Q 3/00 |
| Y | WERKSTATT UND BETRIEB, vol. 118, no. 11, November 1985, page 748, Munich, DE; "Wellen-Naben-Verbindung mit einstellbarem Reibschluss" <br> * Whole article * | 1-3 | |
| Y | EP-A-0 129 633 (CENTRO-MORGÄRDSHAMMAR AB) <br> * Abstract; figure 2 * | 4 | |
| A | MACHINERY AND PRODUCTION ENGINEERING, vol. 128, no. 3293, 21st January 1976, pages 57-59, Burgess Hill, US; "The ETP parallel locking bush" <br> * Figures 1,2; page 57, right-hand column, paragraphs 1,2; page 58, last two lines - page 59, line 4 * | 1-4 | |
| A | KONSTRUKTION, vol. 38, no. 8, August 1986, pages 301-306, Springer-Verlag, Berlin, DE; W. SCHWENZFEIER et al.: "Neue hydraulische Spannhülse für den Maschinenbau" <br> * Paragraph, "Wirkungsweise"; figures 1,2 * | 1-4 | TECHNICAL FIELDS SEARCHED (Int. Cl.4) <br><br> B 25 B <br> B 23 B <br> F 16 B <br> F 16 C <br> F 16 D |
| A | DE-C- 743 530 (H. HOFER) <br> * Claims 1-5; figures * | 1-4 | |
| A | US-A-3 638 973 (C.E. POLETTI) <br> * Abstract; figures 25-31; column 11, line 10 - column 12, line 8 * -/- | 1 | |

The present search report has been drawn up for all claims

| Place of search | Date of completion of the search | Examiner |
|---|---|---|
| THE HAGUE | 08-04-1988 | MAJERUS H.M.P. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)

European Patent
Office

**EUROPEAN SEARCH REPORT**

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| A | US-A-2 618 452  (C. IMHOFER)<br>--- | | |
| A | GB-A- 158 664  (R. DARWIN)<br>--- | | |
| A | DE-A-3 039 267  (EMINENTVERKTYG AG)<br>----- | | |

TECHNICAL FIELDS
SEARCHED (Int. Cl.4)

The present search report has been drawn up for all claims

| Place of search | Date of completion of the search | Examiner |
|---|---|---|
| THE HAGUE | 08-04-1988 | MAJERUS H.M.P. |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
     after the filing date
D : document cited in the application
L : document cited for other reasons
 
& : member of the same patent family, corresponding
     document

EPO FORM 1503 03.82 (P0401)